# EUROPEAN PATENT SPECIFICATION

(11) **EP 0 718 064 B1**
(45) Date of publication and mention of the grant of the patent: **21.07.1999**
(21) Application number: 95850221.3
(22) Date of filing: 07.12.1995
(51) Int. Cl.: B23C 5/26

(54) **A device at high speed spindles**
Vorrichtung an Hochgeschwindigkeitsspindeln
Dispositif pour broches à haute vitesse

(30) Priority: 22.12.1994 SE 9404463
(43) Date of publication of application: 26.06.1996
(73) Proprietor: Aktiebolaget SKF, S-415 50 Göteborg (SE)
(72) Inventor: Göthberg, Sven, S-421 59 Västra Frölunda (SE); Wendeberg, Hans, S-426 71 Västra Frölunda (SE)
(74) Representative: Westman, P. Börje I.

(56) References cited:
- WO-A-94/05452
- DE-B- 1 197 727
- DE-U- 8 027 894
- SOVIET INVENTIONS ILLUSTRATED Section PQ, Week 8051 6 February 1980 Derwent Publications Ltd., London, GB; Class P54, AN 79-L7979B & SU-A-655 482 (PRECISION MACH DES) , 8 April 1979

## Description

The present invention refers to a device at spindles, e.g. machine tool spindles for high rotational speeds, which spindles are equipped with separate elements attached thereto, such as driving and positioning shoulder and counter-weight. A device of this kind is known for example from DE-U-8027894.

Such separate elements traditionally have been fitted to the spindle nose, by means of screws engaging into axial, threaded bottom holes in the radial flange of the standardized spindle nose.

At the extremely quick-running spindles - up to 20000 rpm and even more - which today occur for some machine tool applications, the high rotational speeds result in centrifugal loads acting on the driving and positioning shoulder and on the counter-weight positioned diametrically opposed thereto, which will be so big, that the screw joints, due to high bending and shearing stresses, will burst during operation, whereby the shoulder and the counter-weight might come loose, and, due to the very high peripheral speed, be thrown away at very high speed, which might lead to serious injuries to personnel and damages to material.

The purpose of the present invention is to provide a device at high speed spindles according to the preamble, by means of which the problems related above are solved with a maintained standardized spindle nose, by means of the features defined in the characterizing part of claim 1.

Hereinafter the invention will be further described with reference to an embodiment shown in the accompanying drawing.
Fig. 1 shows in an end view a spindle nose of a machine tool spindle with driving and positioning shoulder and counter-weight attached thereto in accordance with the invention.
Fig. 2 is a cross-section along line II-II in Fig. 1.

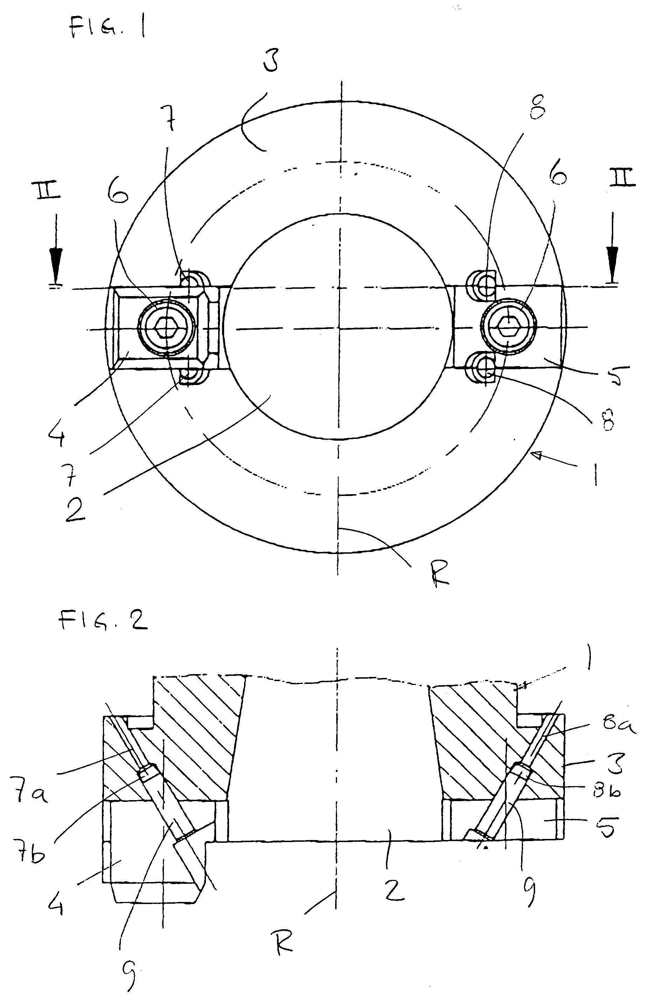

In Fig. 1 is shown in an end-view a spindle nose 1 of a machine tool spindle with cone 2 an a radial flange 3, situated outside this, and to which is attached a driving and positioning shoulder 4, and a counter-weight 5 positioned diametrically opposed thereto. The shoulder 4 as well as the counter-weight 5 are both in conventional manner fitted to the flange 3 by means of an axially arranged screw 6.

Beside that, the shoulder 4 as well as at the counter-weight 5 have provided thereto - in the embodiment shown - two further bores 7, 8 each provided in the flange 3.

As can be seen in the cross-section through the spindle nose 1 along line II-II, shown in Fig. 2, wherein the spindle nose is shown only partially, these further bores 7, 8 do not extend axially but under an angle relative to the rotational axis R of the spindle. These bores thus extend from positions at a distance from the rotational axis R of the spindle at the free side of the flange to positions at a bigger distance from the rotational axis R at the rear side of the flange.

Each of the bores 7, 8 preferably incorporates a first through portion 7a, 8a, having a smaller diameter, and which opens at the rear side of the flange, and continues in a larger diameter portion 7b, 8b arranged coaxially thereto and opening at the front side of the flange, i.e. on the flange side provided with the cone opening. In each of these larger bore portions 7b, 8b is provided a locking pin 9, which is received, preferably under press fit, in the bigger bore portion 7b and 8b, resp., but which has a bigger diameter than the smaller bore portion 7a and 8a resp., opening at the rear side of the flange.

By securing the shoulder 4 and the counter-weight 5 to the spindle nose in this manner, the pins 9 - at the very quick rotation of the spindle - due to the centrifugal force, will urge shoulder and counter-weight by wedge action harder against their grooves in the spindle nose, and at the same time the locking pins also will be more firmly pressed into their drilled holes 7b and 8b, resp., due to centrifugal force.

Due to this extra locking effect, which increases with higher running speed of the spindle, it is efficiently prevented that elements attached to the flange of the spindle might come loose and be thrown away.

By letting the bores 7, 8 extend right through the flange 2, it is obtained in a simple manner a possibility to dismantle the pins 9 which have been inserted in these bores and which after rotation have been heavily driven thereinto, by driving them out the with a mandrel or a similar tool, which is inserted in the bore straight through the bore portion 7a, 8a with smaller diameter.

The invention is not limited to the embodiment shown in the drawing and described in connection thereto but modifications are possible within the scope of the accompanying claims.

## Claims

1. A device at spindles, e.g. machine tool spindles for high rotational speeds, which spindles radially outside their rotational axis (R) are equipped with separate elements attached thereto, such as driving and positioning shoulder and counter-weight,
**characterized therein,**
that said separate elements (4, 5) are secured to the spindle (1) by locking pins (9) arranged to extend through bores (7, 8) arranged at an angle to the rotational axis (R), and adapted during rotation to give the locking pins a component force caused by the centrifugal force, in a direction causing the elements (4, 5) to be wedged, and the locking pins to be pressed into the bores.

2. A device as claimed in claim 1,
**characterized therein,**
that the locking pins (9) are provided with fit in the different bores (7, 8).

3. A device as claimed in claim 1 or 2,
**characterized therein,**
that said bores (7, 8) are provided in a radial flange (3) on the spindle (1).

4. A device as claimed in claim 3,
**characterized therein,**
that the bores (4, 5) extend through the flange (3) and at the portion situated farthest from the rotational axis (R) has a bore portion (7a, 8a) of smaller diameter than the locking pin (9) and the portion of the bore (7b, 8b) wherein the locking pin fits with press fit.

5. A device as claimed in anyone of the preceding claims,
**characterized therein,**
that the elements (4, 5) are secured to the spindle, besides by the locking pins (9) also by means of screw joints (6) provided in conventional manner.

## Patentansprüche

1. Einrichtung an Spindeln, beispielsweise Werkzeugmaschinenspindeln für hohe Drehzahlen, die radial außerhalb ihrer Rotationsachse (R) mit getrennten, an ihnen befestigten Elementen versehen sind, wie z. B. einem Antriebs- und Positionierabsatz und einem Gegengewicht, **dadurch gekennzeichnet,** daß die getrennten Elemente (4, 5) an der Spindel (1) mit Haltestiften (9) befestigt sind, die sich durch Bohrungen (7, 8) erstrecken, die in einem Winkel zur Rotationsachse (R) angeordnet und so angelegt sind, daß sie während der Rotation den Haltestiften eine durch die Zentrifugalkraft hervorgerufene Kraftkomponente in einer Richtung verleihen, welche die Elemente (4, 5) dazu bringt, sich festzuklemmen, und die Haltestifte veranlaßt, in die Bohrungen gedrückt zu werden.

2. Einrichtung nach Anspruch 1, **dadurch gekennzeichnet,** daß die Haltestifte (9) mit Passung in den verschiedenen Bohrungen (7, 8) vorgesehen sind.

3. Einrichtung nach Anspruch 1 oder 2, **dadurch gekennzeichnet,** daß die Bohrungen (7, 8) in einem radialen Flansch (3) an der Spindel (1) vorgesehen sind.

4. Einrichtung nach Anspruch 3, **dadurch gekennzeichnet,** daß sich die Bohrungen (4, 5) durch den Flansch (3) erstrecken und an dem am weitesten von der Rotationsachse (R) entfernten Bereich jeweils einen Bohrungsabschnitt (7a, 8a) mit einem kleineren Durchmesser als der Haltestift (9) und der Abschnitt der Bohrung (7b, 8b) besitzen, in welchem der Haltestift mit Preßpassung sitzt.

5. Einrichtung nach einem der vorhergehenden Ansprüche, **dadurch gekennzeichnet,** daß die Elemente (4, 5) außer mit den Haltestiften (9) auch mittels in herkömmlicher Weise vorgesehenen Schraubverbindungen (6) befestigt sind.

## Revendications

1. Dispositif pour broches, par exemple broches de machine-outil à haute vitesse, lesquelles broches sont équipées, radialement en dehors de leur axe de rotation (R), d'éléments séparés attachés dessus, tels qu'un épaulement et un contre-poids d'entraînement et de positionnement,
caractérisé en ce que lesdits éléments séparés (4, 5) sont immobilisés sur la broche (1) par des goupilles de freinage (9) agencées pour s'étendre dans des alésages (7, 8) qui forment un angle avec l'axe de rotation (R), et adaptés pour donner aux goupilles de freinage, au cours de la rotation, une force composante provoquée par la force centrifuge, dans une direction qui fait que les éléments (4, 5) sont coincés, et que les goupilles de freinage sont enfoncées dans les alésages.

2. Dispositif selon la revendication 1, caractérisé en ce que les goupilles de freinage (9) sont assemblées ajustées dans les différents alésages (7, 8).

3. Dispositif selon la revendication 1 ou 2, caractérisé en ce que lesdits alésages (7, 8) sont réalisés dans une bride radiale (3) sur la broche (1).

4. Dispositif selon la revendication 3, caractérisé en ce que les alésages (7, 8) s'étendent à travers la bride (3) et comportent, dans la partie la plus éloignée de l'axe de rotation (R), une partie d'alésage (7a, 8a) de diamètre inférieur à celui des goupilles de freinage (9) et à celui de la partie de l'alésage (7b, 8b) dans laquelle les goupilles de freinage sont ajustées avec un ajustage serré.

5. Dispositif selon l'une quelconque des revendications précédentes, caractérisé en ce que les éléments (4, 5) sont immobilisés sur la broche, non seulement par les goupilles de freinage (9), mais aussi au moyen d'un assemblage par vis (6) réalisé de manière classique.
